# EUROPÄISCHE PATENTSCHRIFT

(11) **EP 1 652 321 B1**
(45) Veröffentlichungstag und Bekanntmachung des Hinweises auf die Patenterteilung: **07.02.2007**
(21) Anmeldenummer: 04766152.5
(22) Anmeldetag: 07.07.2004
(51) Int. Cl.: H04B 7/26

(54) **VERFAHREN ZUR SYNCHRONISATION EINES IN FUNKZELLEN AUFGETEILTEN FUNKKOMMUNIKATIONSSYSTEMS, SOWIE EINE BASIS- UND MOBILSTATION IN EINEM DERARTIGEN SYSTEM**
METHOD FOR SYNCHRONISATION OF A RADIO COMMUNICATION SYSTEM DIVIDED INTO RADIO CELLS, AND A BASE STATION AND A MOBILE STATION IN SUCH A SYSTEM
PROCEDE DE SYNCHRONISATION D'UN SYSTEME DE RADIOCOMMUNICATION REPARTI EN CELLULES RADIO, AINSI QUE STATION DE BASE ET STATION MOBILE DANS UN SYSTEME DE CE TYPE

(30) Priorität: 07.08.2003 DE 10336312
(43) Veröffentlichungstag der Anmeldung: 03.05.2006
(73) Patentinhaber: SIEMENS AKTIENGESELLSCHAFT, 80333 München (DE)
(72) Erfinder: COSTA, Elena, 85748 Garching (DE); SCHULZ, Egon, 80993 München (DE); WECKERLE, Martin, 89134 Blaustein (DE); ROHLING, Hermann, 38304 Wolfenbüttel (DE); MEIER, Niclas, 21073 Hamburg (DE); GALDA, Dirk, 22529 Hamburg (DE)
(86) Internationale Anmeldenummer: PCT/EP2004/051395
(87) Internationale Veröffentlichungsnummer: WO 2005/015777

(56) Entgegenhaltungen:
- US-A- 6 141 332
- US-A1- 2002 072 370
- US-A1- 2002 075 978

## Beschreibung

Die Erfindung betrifft ein Verfahren zur Synchronisation eines in Funkzellen aufgeteilten Funkkommunikationssystems gemäß dem Oberbegriff des Patentanspruchs 1, sowie eine Basisstation, eine Mobilstation und ein Funkkommunikationssystem in einem derartigen System.

Zellulare Funkkommunikationssysteme, insbesondere Mobilfunksysteme, werden in synchronisierte und in nichtsynchronisierte Funkkommunikationssysteme unterteilt.

Bei ersteren sind Basisstationen benachbarter Funkzellen zueinander zeitlich und/oder hinsichtlich der Trägerfrequenzen synchronisiert. Zur Synchronisation, insbesondere zur Zeitsynchronisation, werden beispielsweise seitens der Basisstationen GPS-Empfänger eingesetzt oder es werden Basisstationen mittels aufwändig auszutauschender Synchronisationssignale aufeinander synchronisiert. Bei der Übertragung von Synchronisationssignalen wiederum werden Funkübertragungsressourcen belegt, die somit nicht mehr für eine gebührenpflichtige Teilnehmernutzdatenübertragung (Payload) zur Verfügung stehen.

Bei nichtsynchronisierten Funkkommunikationssystemen sind Basisstationen benachbarter Funkzellen untereinander nicht synchronisiert.

Insbesondere bei Mobilfunknetzen gewinnen Synchronisationsverfahren an Bedeutung, wenn zur Datenübertragung so genannte "Orthogonal Frequency Division Multiplexing"- Übertragungs-techniken, kurz OFDM-Übertragungs-techniken, verwendet werden. Mit Hilfe von OFDM-Datenübertragungen sind hohe Datenraten erfordernde Dienste, insbesondere Videoübertragungen, kosteneffizient übertragbar. Eine OFDM-Daten-übertragung erfolgt mittels so genannter Subträger (Subcarrier), die durch Unterteilung einer zur Verfügung stehenden Bandbreite gebildet werden. Da diese Subträger in benachbarten Funkzellen besonders vorteilhaft mehrfach genutzt werden, sind bei Planung und Betrieb entstehende Gleichkanalstörungen ("Cochannel"-Interferenzen) zu beachten.

Für eine bezüglich einer Datenübertragung optimierte Zuteilung von Funkübertragungsressourcen (Radio-Ressource-Management, RRM) ist eine exakte Frequenz- und/oder Zeitsynchronisation notwendig, abhängig vom jeweils verwendeten Funkübertragungsverfahren. Die beiden beispielhaft genannten Synchronisationsverfahren sind dadurch, dass sie auf empfangenen Mobilstationssignalen basieren, bezüglich der Genauigkeit im großen Maße abhängig sowohl von der Qualität als auch von der Anzahl der empfangenen Mobilstationssignale.

Es ist daher Aufgabe der vorliegenden Erfindung, für ein zellular aufgebautes Funkkommunikationssystem, insbesondere für ein Mobilfunksystem mit OFDM-Datenübertragung, ein Synchronisationsverfahren mit geringem Aufwand anzugeben.

Die Aufgabe der Erfindung wird durch die Merkmale des Patentanspruchs 1 gelöst. Vorteilhafte Weiterbildungen sind in den Unteransprüchen angegeben.

Durch das erfindungsgemäße Verfahren wird bei einem zellularen Funkkommunikationssystem mit einfachen Mitteln eine Synchronisation bezüglich Zeit und/oder Frequenz mit Hilfe von Pilotsignalen realisiert.

Dabei wird zur Synchronisation insbesondere auf den Einsatz von kostenintensiven GPS-Empfängern verzichtet und es wird auf eine Übertragung zusätzlicher Signalisierungsinformationen zur Synchronisation verzichtet, die bislang zwischen Basisstation und Mobilstation auf einer höheren Protokollschicht ausgetauscht werden mussten.

Die erfindungsgemäße Synchronisation wird selbstständig und lediglich durch empfangsseitige Signalverarbeitung und Nachregelung eines Synchronisationszustands der Basisstationen bzw. der Mobilstationen durchgeführt.

Durch die erfindungsgemäße Verwendung von Pilotsignalen erfolgt beispielsweise innerhalb jeder Funkzelle eine Pilotsignalüberlagerung, die an einer betrachteten Basisstation vorteilhaft zu einem hohen Signal-Rausch-Verhältnis des Pilotsignals führt. Eine empfangsseitige Auswertung der Pilotsignale zu Synchronisationszwecken wird somit auch bei ungünstigen Empfangsverhältnissen realisiert.

Durch das erfindungsgemäße Verfahren wird an einer betrachteten Basisstation vorteilhaft eine Pilotsignalüberlagerung mit einem hohen Signal-Rausch-Verhältnis erzielt, mit dem eine empfangsseitige Auswertung der Pilotsignale zu Synchronisationszwecken auch bei ungünstigen Empfangsverhältnissen realisiert wird.

Beim erfindungsgemäßen Verfahren wird durch die vorgeschlagene Pilotsignalstruktur bzw. durch die insbesondere zufällig erfolgende Auswahl des Pilotsignals keine zentrale Kontrolleinrichtung zur Vergabe der jeweiligen Pilotsignale benötigt.

Durch die erfindungsgemäße Pilotsignalauswahl und -zuordnung, die beispielsweise funkzellenspezifisch und gegebenenfalls durch zufällig Auswahl erfolgt, wird eine funkzellenabhängige Gewichtung empfangener Mobilstationssignale bzw. Basisstationssignale ermöglicht. Bei Ermittlung des Synchronisationswertes für die durchzuführende Frequenz- und/oder Zeitsynchronisation ist somit eine bezüglich der Funkzellen gewichtete Synchronisationswertschätzung möglich, bei der auch schwach empfangene Mobilstations- bzw. Basisstationssignale berücksichtigt werden.

Im Folgenden wird die Erfindung anhand der Zeichnung näher erläutert. Dabei zeigen:
- FIG 1: das erfindungsgemäße Synchronisationsverfahren an einem zellular aufgebauten Funkkommunikationssystem,
- FIG 2: eine Pilotsignal-Subträger Empfangssituation an einer in FIG 1 dargestellten Basisstation,
- FIG 3: einen Rahmen, mit dessen Hilfe sowohl Nutzdaten als auch Pilotsignale übertragen werden, bezogen auf die Figuren FIG 1 und FIG 2,
- FIG 4: eine Überlagerung von Mobilstationssignalen einer gemeinsamen Funkzelle an einer Basisstation, und
- FIG 5: eine Überlagerung von Mobilstationssignalen benachbarter Funkzellen an einer Basisstation.

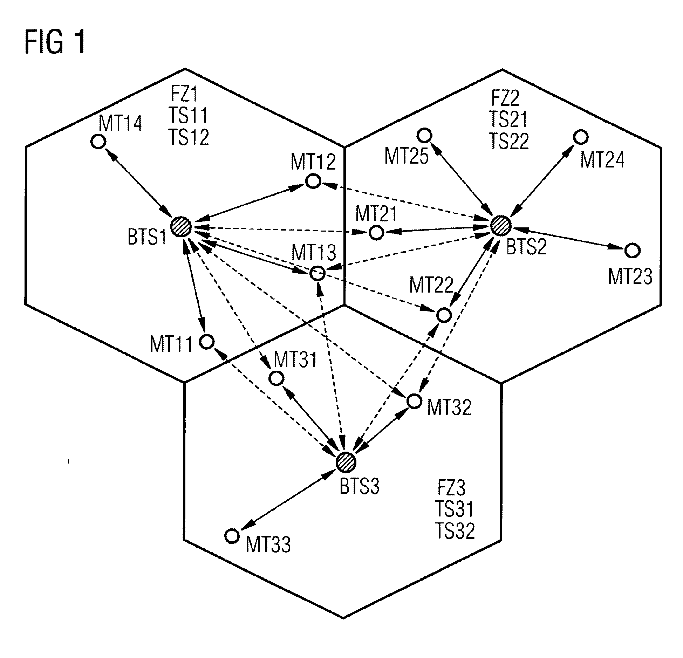

FIG 1 zeigt das erfindungsgemäße Synchronisationsverfahren an einem zellular aufgebauten Funkkommunikationssystem.

Es wird stellvertretend für andere Mobilfunksysteme ein zellulares Funkkommunikationssystem betrachtet, bei dem eine Datenübertragung mittels einer OFDM-Übertragungstechnik derart durchgeführt wird, dass die Datenübertragung mittels einer auf Zeitschlitzen basierenden Rahmenstruktur und ein Vielfachzugriff unterschiedlicher Teilnehmer im Frequenzbereich (Frequency Division Multiple Access, FDMA) erfolgt.

Eine zur Verfügung stehende Bandbreite wird in so genannte Subträger unterteilt, unterschiedliche Teilnehmer übertragen zeitschlitzweise auf unterschiedlichen Subträgern.

Basisstationen benachbarter Funkzellen verwenden gemeinsam einen Vorrat an Funkübertragungsressourcen, der durch Zeitschlitze der Subträger gebildet wird. Benachbarte Funkzellen weisen somit einen Frequenzwiederholungsfaktor von eins bezüglich der Subträger auf.

Drei benachbarte Funkzellen FZ1 bis FZ3 weisen jeweils eine Basisstation BTS1 bis BTS3 auf. Jede einzelne der Basisstationen BTS1 bis BTS3 versorgt eine Anzahl von der jeweiligen Funkzelle FZ1 bis FZ3 zugeordneten Mobilstationen MT11 bis MT33. Dabei sind einer ersten Basisstation BTS1 zur Funkversorgung insgesamt vier Mobilstationen MT11 bis MT14, einer zweiten Basisstation BTS2 insgesamt fünf Mobilstationen MT21 bis MT25 und einer dritten Basisstation BTS3 insgesamt drei Mobilstationen MT31 bis MT33 zur Funkversorgung zugeteilt.

Stellvertretend für alle anderen betrachtet wählt erfindungsgemäß die erste Basisstation BTS1 aufgrund der OFDM-Daten-übertragung aus den zur Verfügung stehenden Subträgern zwei Pilotsignal-Subträger TS11 und TS12 für eine Pilotsignalübertragung aus. Die erste Basisstation BTS1 teilt den zugeordneten Mobilstationen MT11 bis MT14 beispielsweise durch direkte Signalisierung die ausgewählten Pilotsignal-Subträger TS11 und TS12 mit.

Diese ausgewählten Pilotsignal-Subträger TS11 und TS12 werden parallel mit anderen Subträgern, die einer Nutzdatenübertragung zugeordnet sind, zur Übertragung eines in einer Abwärtsrichtung (Downlink) zu sendenden Datenrahmens verwendet.

Abweichend zur direkten Signalisierung der verwendeten Pilotsignal-Subträger ist auch eine Verwendung von sende- und empfangsseitig angeordneten Tabellen möglich, in denen jeweils zu verwendende Pilotsignal-Subträgerpaare abgelegt sind. In diesem Fall wird durch die Basisstation ein entsprechendes Subträgerpaar durch Verweis auf einen Tabelleneintrag den zugeordneten Mobilstationen mitgeteilt.

Eine zufällige Auswahl von Pilotsignal-Subträgerpaaren kann auch mit Hilfe eines Sprungmusters bei einer festgelegten Menge von Pilotsignal-Subträgern erfolgen. Dann wird den zugeordneten Mobilstationen beispielsweise das Sprungmuster mitgeteilt.

Seitens der Mobilstationen MT11 bis MT14 werden die signalisierten Pilotsignal-Subträger TS11, TS12 ebenfalls für eine Pilotsignalübertragung in einer Aufwärtsrichtung (Uplink) zur ersten Basisstation BTS1 verwendet.

Vorteilhafterweise erfolgt die seitens der Basisstation BTS1 durchgeführte Auswahl der Pilotsignal-Subträger zufällig und wird rahmenweise wechselnd durchgeführt, wodurch sowohl im Uplink als auch im Downlink die Pilotsignal-Subträger rahmenweise wechseln.

Gleiches gilt für die zweite Basisstation BTS2 und für die dritte Basisstation BTS3 der benachbarten Funkzellen FZ2 und FZ3. Die zweite Basisstation BTS2 wählt beispielsweise zwei Pilotsignal-Subträger TS21 und TS22 aus, die sie im Downlink an die zugeordneten Mobilstationen MT21 bis MT25 signalisiert, während die dritte Basisstation BTS3 beispielsweise zwei Pilotsignal-Subträger TS31 und TS32 auswählt und entsprechend an die ihr zugeordneten Mobilstationen MT31 bis MT33 signalisiert.

Die Mobilstationen MT21 bis MT25 verwenden ihrerseits die ihnen zugeordneten Pilotsignal-Subträger TS21 und TS22 für eine Pilotsignalübertragung im Uplink zur zweiten Basisstation BTS2, während die Mobilstationen MT31 bis MT33 die ihnen zugeordneten Pilotsignal-Subträger TS31 und TS32 für eine Pilotsignalübertragung im Uplink zur dritten Basisstation BTS3 verwenden.

Stellvertretend für die benachbarten Funkzellen FZ2, FZ3 wird anhand der ersten Funkzelle FZ1 die erfindungsgemäße Synchronisation näher erläutert. Dabei ist hier unter Synchronisation eine zeitliche Synchronisation von Zeitschlitzen und/oder eine Frequenzsynchronisation verwendeter Subträger zu verstehen.

Die erste Basisstation BTS1 der ersten Funkzelle FZ1 empfängt im Uplink UL neben den Pilotsignalen TS11, TS12 der ihr zugeordneten Mobilstationen MT11 bis MT14 noch zusätzlich beispielsweise die Pilotsignale TS21, TS22, TS31, TS32 der Mobilstationen MT21, MT22, MT31 und MT32 der benachbarten Funkzellen FZ2 und FZ3. Die erste Basisstation BTS1 bestimmt basierend auf den empfangenen Pilotsignalen TS11, TS12, TS21, TS22, TS31 und TS32 eine erste Zeitabweichung und/oder eine erste Frequenzabweichung und leitet aus diesen Werten einen geeigneten Synchronisationswert für die Zeit- und/oder für die Frequenzsynchronisation ab, auf die bzw. auf den sich die erste Basisstation BTS1 synchronisiert.

Stellvertretend für alle Mobilstationen betrachtet, empfängt im Downlink eine dritte Mobilstation MT13 der ersten Funkzelle FZ1 neben Pilotsignalen TS11, TS12 der Basisstation BTS1 der eigenen Funkzelle FZ1 auch Pilotsignale TS21, TS22, TS31, TS32 der benachbarten Basisstationen BTS2 und BTS3 der Funkzellen FZ2 und FZ3. Die dritte Mobilstation M13 bestimmt nun basierend auf den empfangenen Pilotsignalen TS11, TS12, TS21, TS22, TS31 und TS32 eine zweite Zeitabweichung und/oder eine zweite Frequenzabweichung und leitet aus diesen Werten einen geeigneten Synchronisationswert zur Zeit- und/oder Frequenzsynchronisation ab, auf den bzw. auf die sich die Mobilstation MT13 synchronisiert.

Diese erfindungsgemäße Synchronisation wird rahmenweise wiederholt, wodurch sich im zeitlichen Mittel eine genaue, selbstorganisierte Zeit- und/oder Frequenzsynchronisation ergibt.

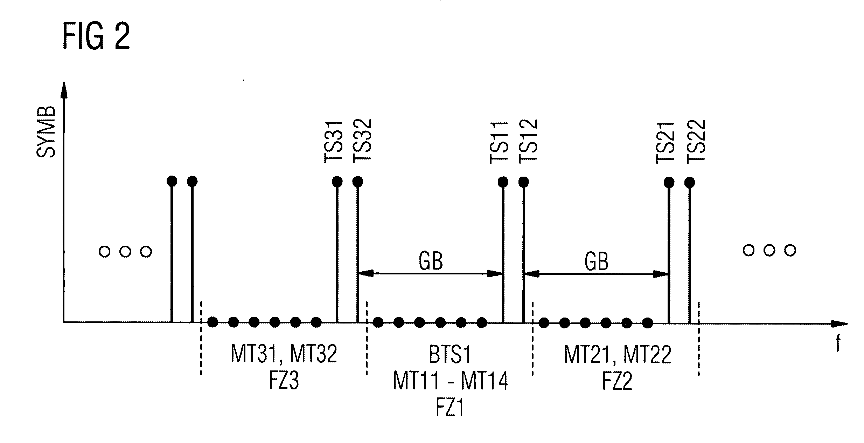

FIG 2 zeigt bezugnehmend auf FIG 1 eine Pilotsignal-Subträger Empfangssituation an der ersten Basisstation BTS1. Dabei sind an der horizontalen Achse Subträgerfrequenzen f und an der vertikalen Achse Symbole SYMB aufgetragen.

Die erste Basisstation BTS1 empfängt sowohl die der ersten Funkzelle FZ1 zuordenbaren Pilotsignal-Subträger TS11 und TS12 der Mobilstationen MT11 bis MT14 als auch die der zweiten Funkzelle FZ2 zuordenbaren Pilotsignal-Subträger TS21 und TS22 der Mobilstationen MT21 und MT22 und die der dritten Funkzelle FZ3 zuordenbaren Pilotsignal-Subträger TS31 und TS32 der Mobilstationen MT31 und MT32.
Während der Pilotsignalübertragung werden durch die weiteren zur Verfügung stehenden Subträger keine Symbole SYMB übertragen - hier dargestellt als kreisförmige Markierungen auf der horizontalen Achse.

Die Subträger-Paare TS11 und TS12, TS21 und TS22, TS31 und TS32 werden durch ein nichtbenutztes Subträger-Band GB getrennt, durch das während der Pilotsignaldauer Zwischenträgerstörungen (Inter-Carrier-Interferenz, ICI) vermieden werden.

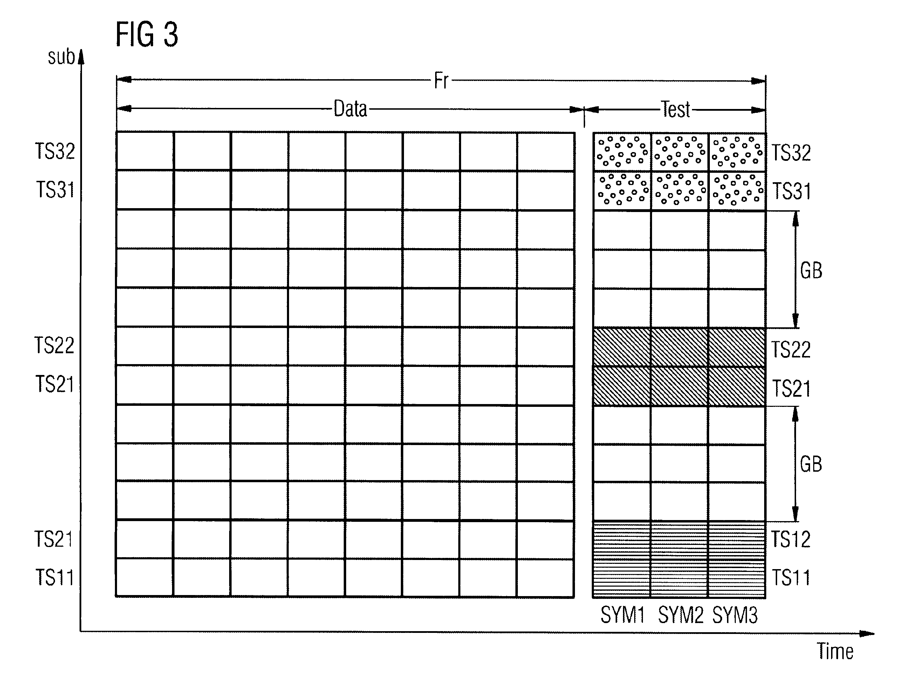

FIG 3 zeigt einen Rahmen Fr, mit dessen Hilfe sowohl Nutzdaten Data als auch Pilotsignale Test übertragen werden, im Bezug auf die Figuren FIG 1, FIG 2.

Dabei sind an der vertikalen Achse zur Verfügung stehende Subträger sub aufgetragen, während an der horizontalen Achse ein zeitlicher Verlauf Time des Rahmens Fr dargestellt ist.

Der Rahmen Fr weist einen zur Nutzdatenübertragung verwendeten ersten Block Data auf, wobei die Nutzdatenübertragung mit Hilfe einer hier nicht näher beschriebenen OFDM-Datenübertragung durchgeführt wird. Am Ende des ersten Blocks Data schließt sich ein zweiter Block Test an, der zur Pilotsignalübertragung verwendet wird.

In einer bevorzugten Ausführungsform werden von jeder Basisstation jeweils zwei unmittelbar benachbarte Subträger TS11 und TS12 bzw. TS21 und TS22 bzw. TS31 und TS32 als Pilotsignal-Subträger ausgewählt. Anhand von zwei benachbarten Pilotsignal-Subträgern, die jeweils gleiche Symbole übertragen, wird eine Zeitabweichung beispielsweise der ersten Basisstation BTS1 zu den Mobilstationen MT11 bis MT14, MT21, MT22, MT31 und MT32 durch Schätzung bestimmt.

Zur Bestimmung eines Frequenzsynchronisationswerts für eine Frequenzsynchronisation werden mindestens zwei aufeinanderfolgende Symbole SYM1 und SYM2 bzw. Sym2 und SYM3 der Pilotsignal-Subträger TS11 und TS12 bzw. TS21 und TS22 bzw. TS31 und TS32 verwendet. Bei Verwendung von drei Symbolen SYM1 bis SYM3 wird die durchzuführende Schätzung zur Bildung des Frequenzsynchronisationswerts in der Genauigkeit verbessert, da hierdurch so genannte Zwischensymbolstörungen (Intersymbol-Interferenzen, ISI) während der Auswertung zur Synchronisation vermieden werden.

Die Pilotsignal-Subträger TS11 und TS12 bzw. TS21 und TS22 bzw. TS31 und TS32 einer Funkzelle sind idealerweise direkt benachbart, jedoch ist auch hier ein Abstand zwischen den beiden Pilotsignal-Subträgern TS11 und TS12 bzw. zwischen den beiden Pilotsignal-Subträgern TS21 und TS22 bzw. zwischen den beiden Pilotsignal-Subträgern TS31 und TS32 möglich. Dieser Abstand ist dabei so zu wählen, dass die einzelnen Pilotsignal-Subträger entsprechend einer vorgebbaren minimalen Phasenabweichung voneinander entfernt sind.

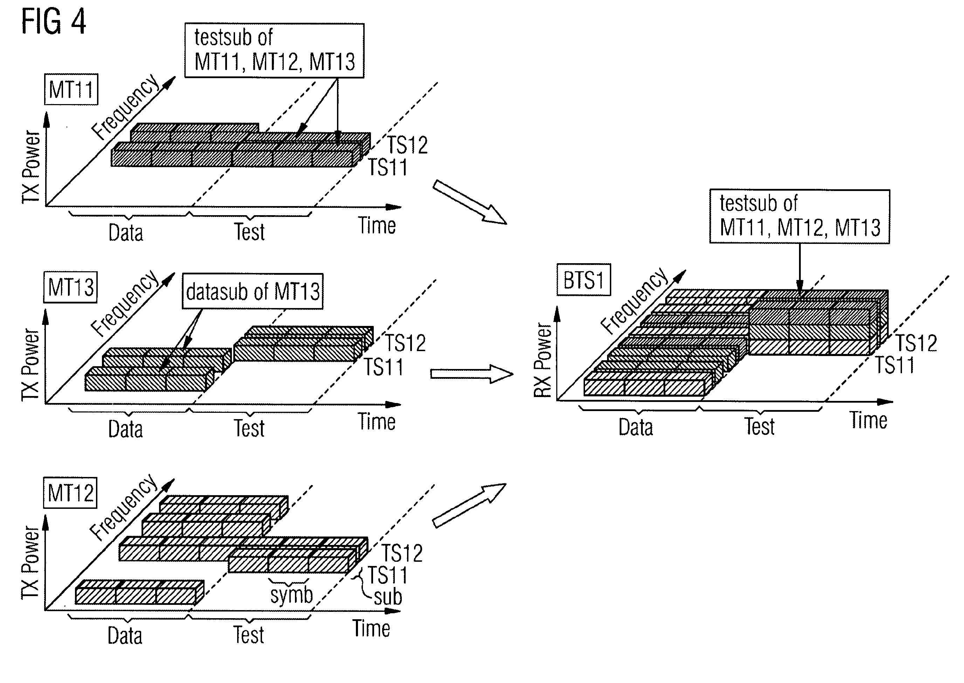

FIG 4 zeigt in einem Ausschnitt eine Überlagerung von Mobilstationssignalen der Mobilstationen MT11 bis MT12 der gemeinsamen Funkzelle FZ1 an der Basisstation BTS1. Dabei ist jeweils an der vertikalen Achse eine Sendeleistung TX Power und auf der horizontalen Achse ein zeitlicher Verlauf Time eines Rahmens aufgetragen, während eine dritte Achse zur Kennzeichnung von Subträgerfrequenzen Frequency dient.

Die drei Mobilstationen MT11 bis MT13 verwenden im Uplink jeweils gleichzeitig gleich aufgebaute Pilotsignal-Subträger testsub innerhalb eines Bereichs Test.

In einem Bereich Data erfolgt hingegen die jeweilige Nutzdatenübertragung der jeweiligen Mobilstation MT11 bis MT13 mit Hilfe von Subträgern datasub.

An der Basisstation BTS1 erfolgt eine additive Überlagerung der von den Mobilstationen MT11 bis MT13 gesendeten Mobilstationssignale, wobei innerhalb des Bereichs Test eine deutliche Signalpegelerhöhung erzielt wird - ohne dass zu diesem Zweck eine Sendeleistungserhöhung seitens der Mobilstationen MT11 bis MT13 erforderlich wäre.

Zusammenfassend werden einheitliche Symbole der Pilotsignal-Subträger testsub zeitgleich innerhalb einer Funkzelle von allen Mobilstationen MT11 bis MT13 ausgesendet, wodurch eine Erhöhung des Empfangspegels des Summensignals an der betrachteten Basisstation BTS1 erzielt wird. Idealerweise wird ein maximaler Frequenzabstand zwischen den für die Pilotsignalübertragung verwendeten Subträgerpaare verwendet. In einer vorteilhaften Weiterbildung wird ein phasenkontinuierliches Pilotsignal übertragen.

Stellvertretend für die Mobilstationen MT11 bis MT13 und für die Basisstation BTS1 ist an der Mobilstation MT12 ein OFDM-Symbol symb und ein OFDM-Subträger sub eingetragen.

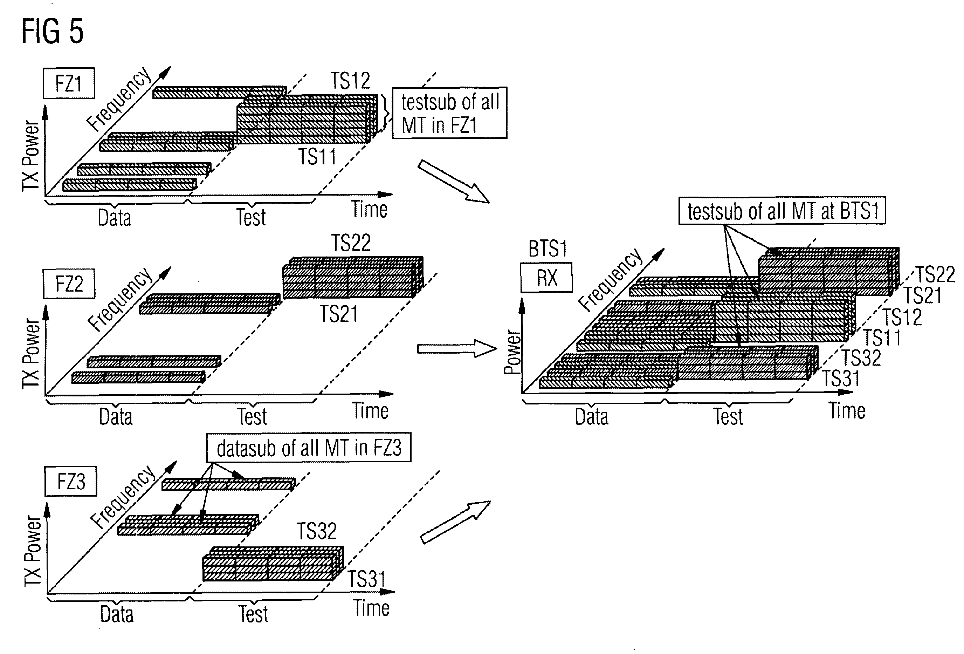

FIG 5 zeigt in einem Ausschnitt eine Überlagerung von Mobilstationssignalen benachbarter Funkzellen FZ1 bis FZ3 an einer empfangenden Basisstation BTS1.

Dabei ist jeweils an der vertikalen Achse eine Sendeleistung TX Power und auf der horizontalen Achse ein zeitlicher Verlauf Time eines Rahmens aufgetragen, während eine dritte Achse zur Kennzeichnung von Subträgerfrequenzen Frequency dient.

Im Bereich Data erfolgt wiederum jeweils eine Nutzdatenübertragung während im Bereich Test wiederum eine Pilotsignalübertragung mit entsprechenden Pilotsignal-Subträgern stattfindet.

Mobilstationssignale der drei Funkzellen FZ1 bis FZ3 überlagern sich additiv mit jeweils zugeordnetem Pilotsignal-Subträgerpaar TS11 und TS12, TS21 und TS22 sowie TS31 und TS32 an der Basisstation BTS1.

Jedes empfangene Subträgerpaar TS11 und TS12, TS21 und TS22 sowie TS31 und TS32 ist einer Funkzelle FZ1 bis FZ3 zuordenbar. Dadurch sind die in benachbarten Funkzellen auftretenden Zeit- und Frequenzabweichungen in jeder Basisstation individuell bestimmbar.

## Patentansprüche

1. Verfahren zur Synchronisation eines in Funkzellen aufgeteilten Funkkommunikationssystems,
- bei dem mittels Vielfachzugriffsverfahren Daten übertragen werden,
- bei dem jede Funkzelle eine Basisstation zur Funkversorgung mehrerer der Funkzelle zugeordneter Mobilstationen aufweist,
**dadurch gekennzeichnet,**
- **dass** eine Basisstation mindestens ein Pilotsignal bestimmt und den zugeordneten Mobilstationen in einer Abwärtsrichtung mitteilt,
- **dass** die zugeordneten Mobilstationen das mitgeteilte Pilotsignal in einer Aufwärtsrichtung zur Basisstation übertragen,
- **dass** die Basisstation Pilotsignale sowohl von den ihr zugeordneten Mobilstationen als auch Pilotsignale von Mobilstationen benachbarter Funkzellen empfängt und aus den empfangenen Pilotsignalen einen Synchronisationswert für eine Zeitsynchronisation und/oder für eine Frequenzsynchronisation bestimmt, auf den sich die Basisstation synchronisiert.

2. Verfahren nach Anspruch 1, **dadurch gekennzeichnet,**
- **dass** eine Mobilstation neben dem Pilotsignal der Basisstation der eigenen Funkzelle auch Pilotsignale von Basisstationen aus benachbarten Funkzellen empfängt, und
- **dass** die Mobilstation aus den empfangenen Pilotsignalen einen Synchronisationswert für eine Zeitsynchronisation und/oder für eine Frequenzsynchronisation bestimmt, auf den sich die Mobilstation synchronisiert.

3. Verfahren nach Anspruch 1 oder 2, **dadurch gekennzeichnet, dass** das Pilotsignal durch die Basisstation zufällig ausgewählt wird und/oder dass das Pilotsignal seitens der Mobilstationen einer Funkzelle in Aufwärtsrichtung derart übertragen wird, dass innerhalb der Funkzelle eine Pilotsignal-Pegelüberhöhung erfolgt.

4. Verfahren nach einem der Ansprüche 1 bis 3, **dadurch gekennzeichnet, dass** zur Datenübertragung ein Zeitschlitz-Vielfachzugriffsverfahren und/oder ein Frequenz-Vielfachzugriffsverfahren verwendet wird.

5. Verfahren nach Anspruch 4, **dadurch gekennzeichnet, dass** beim Zeitschlitz-Vielfachzugriffsverfahren mit rahmenweiser Datenübertragung das Pilotsignal rahmenweise wechselnd ausgewählt wird.

6. Verfahren nach Anspruch 4 oder 5, **dadurch gekennzeichnet, dass** beim Zeitschlitz-Vielfachzugriffsverfahren mit rahmenweiser Datenübertragung das Pilotsignal am Rahmenende übertragen wird.

7. Verfahren nach einem der Ansprüche 4 bis 6, **dadurch gekennzeichnet, dass** zur Pilotsignalübertragung gleiche Zeitschlitze und/oder gleiche Frequenzen verwendet werden.

8. Verfahren nach einem der vorhergehenden Ansprüche, **dadurch gekennzeichnet, dass** zur Datenübertragung ein OFDM-Daten-übertragungsverfahren verwendet wird und dass mindestens zwei Pilotsignal-Subträger zur Pilotsignalübertragung verwendet werden.

9. Verfahren nach Anspruch 8, **dadurch gekennzeichnet, dass** bei Verwendung eines Zeitschlitz-Vielfachzugriffsverfahrens mit rahmenweiser Datenübertragung die Pilotsignal-Subträger rahmenweise wechselnd ausgewählt werden.

10. Verfahren nach Anspruch 8 oder 9, **dadurch gekennzeichnet, dass** bei Verwendung eines Zeitschlitz-Vielfachzugriffsverfahrens mit rahmenweiser Datenübertragung die Pilotsignalübertragung am Rahmenende erfolgt.

11. Verfahren nach Anspruch 9 oder 10, **dadurch gekennzeichnet, dass** die Pilotsignal-Subträger von der Basisstation derart ausgewählt werden, dass sie unmittelbar benachbart sind.

12. Verfahren nach einem der Ansprüche 9 bis 11, **dadurch gekennzeichnet, dass** das Pilotsignal durch mindestens zwei aufeinanderfolgende Symbole gebildet wird und die aufeinanderfolgenden Symbole durch die Pilotsignal-Subträger übertragen werden.

13. Verfahren nach Anspruch 12, **dadurch gekennzeichnet, dass** während der Pilotsignalübertragung durch weitere zur Verfügung stehende Subträger keine weiteren Symbole übertragen werden.

14. Verfahren nach Anspruch 12 oder 13, **dadurch gekennzeichnet,**
- **dass** basierend auf einer ermittelten Phasenrotation zwischen empfangenen Symbolen unterschiedlicher Pilotsignal-Subträger eine Zeitabweichung bestimmt wird, und/oder
- **dass** basierend auf einer ermittelten Phasenrotation zwischen aufeinanderfolgenden Symbolen eines Pilotsignal-Subträgers eine Frequenzabweichung bestimmt wird.

15. Verfahren nach einem der vorhergehenden Ansprüche, **dadurch gekennzeichnet, dass** die Datenübertragung mittels TDD-Funkübertragungsstandard oder mittels FDD-Funkübertragungsstandard durchgeführt wird.

16. Basisstation, **gekennzeichnet durch** Mittel zur Durchführung des Verfahrens nach einem der Ansprüche 1 bis 15.

17. Mobilstation, **gekennzeichnet durch** Mittel zur Durchführung des Verfahrens nach einem der Ansprüche 2 bis 15.

18. Funkkommunikationssystem, **gekennzeichnet durch** mindestens eine Basisstation nach Anspruch 16.

19. Funkkommunikationssystem, **gekennzeichnet durch** mindestens eine Mobilstation nach Anspruch 17.

## Claims

1. Method for synchronizing a radio communication system divided into radio cells,
- with which data is transmitted by means of multiple access methods,
- with which every radio cell has a base station for the radio coverage of a number of mobile stations assigned to the radio cell,
**characterized in that**
- a base station determines at least one pilot signal and notifies the assigned mobile stations in a downlink,
- the assigned mobile stations transmit the notified pilot signal to the base station in an uplink,
- the base station receives pilot signals both from the mobile stations assigned to it as well as pilot signals from mobile stations of adjacent radio cells and uses the received pilot signals to determine a synchronization value for a time synchronization and/or frequency synchronization, to which the base station is synchronized.

2. Method according to claim 1, **characterized in that**
- a mobile station receives both the pilot signal from the base station of its own radio cell and pilot signals from base stations from adjacent radio cells and
- the mobile station uses the received pilot signals to determine a synchronization value for a time synchronization and/or for frequency synchronization, to which the mobile station is synchronized.

3. Method according to claim 1 or 2, **characterized in that** the pilot signal is selected by the base station in a random manner and/or the pilot signal is transmitted by the mobile station of a radio cell in the uplink such that a rise in the pilot signal level takes place within the radio cell.

4. Method according to one of claims 1 to 3, **characterized in that** a time slot multiples access method and/or a frequency multiple access method is used for data transmission.

5. Method according to claim 4, **characterized in that** in the case of the time slot multiple access method with data transmission frame by frame the pilot signal is selected in an alternating manner frame by frame.

6. Method according to claim 4 or 5, **characterized in that** in the case of the time slot multiple access method with data transmission frame by frame the pilot signal is transmitted at the end of the frame.

7. Method according to one of claims 4 to 6, **characterized in that** the same time slots and/or same frequencies are used for pilot signal transmission.

8. Method according to one of the preceding claims, **characterized in that** an OFDM data transmission method is used for data transmission and at least two pilot signal subcarriers are used for pilot signal transmission.

9. Method according to claim 8, **characterized in that** when a time slot multiple access method with frame by frame data transmission is used, the pilot signal subcarriers are selected in an alternating manner frame by frame.

10. Method according to claim 8 or 9, **characterized in that** when a time slot multiple access method with frame by frame data transmission is used, pilot signal transmission takes place at the end of the frame.

11. Method according to claim 9 or 10, **characterized in that** the pilot signal subcarriers are selected by the base station such that they are directly adjacent.

12. Method according to one of claims 9 to 11, **characterized in that** the pilot signal is formed by at least two successive symbols and the successive symbols are transmitted by the pilot signal subcarriers.

13. Method according to claim 12, **characterized in that** during pilot signal transmission no further symbols are transmitted by further available subcarriers.

14. Method according to claim 12 or 13, **characterized in that**
- a time deviation is determined based on a phase rotation established between received symbols of different pilot signal subcarriers and/or
- a frequency deviation is determined based on a phase rotation established between successive symbols of a pilot signal subcarrier.

15. Method according to one of the preceding claims, **characterized in that** the data transmission is implemented by means of the TDD radio transmission standard or by means of the FDD radio transmission standard.

16. Base station, **characterized by** means for implementing the method according to one of claims 1 to 15.

17. Mobile station, **characterized by** means for implementing the method according to one of claims 2 to 15.

18. Radio communication system, **characterized by** at least one base station according to claim 16.

19. Radio communication system, **characterized by** at least one mobile station according to claim 17.

## Revendications

1. Procédé de synchronisation d'un système de radiocommunication réparti en cellules radio,
- dans lequel des données sont transmises au moyen de procédés d'accès multiple,
- dans lequel chaque cellule radio comprend une station de base pour la couverture radio de plusieurs stations mobiles associées à la cellule radio,
**caractérisé**
- **en ce qu'**une station de base définit au moins un signal pilote et le communique aux stations mobiles associées dans un sens descendant,
- **en ce que** les stations mobiles associées transmettent le signal pilote communiqué à la station de base dans un sens ascendant,
- **en ce que** la station de base reçoit non seulement des signaux pilotes des stations mobiles qui lui sont associées, mais également des signaux pilotes de stations mobiles de cellules radio contiguës, et détermine, à partir des signaux pilotes reçus, une valeur de synchronisation pour une synchronisation temporelle et/ou pour une synchronisation fréquentielle, sur laquelle la station de base se synchronise.

2. Procédé selon la revendication 1, **caractérisé**
- **en ce qu'**une station mobile reçoit également, en plus du signal pilote de la station de base de la cellule radio propre, des signaux pilotes de stations de base de cellules radio contiguës et
- **en ce que** la station mobile détermine, à partir des signaux pilotes reçus, une valeur de synchronisation pour une synchronisation temporelle et/ou pour une synchronisation fréquentielle, sur laquelle la station mobile se synchronise.

3. Procédé selon la revendication 1 ou 2, **caractérisé en ce que** le signal pilote est choisi de manière aléatoire par la station de base et/ou **en ce que** le signal pilote est transmis dans le sens ascendant de la part des stations mobiles d'une cellule radio de manière à ce qu'un rehaussement du niveau des signaux pilotes ait lieu à l'intérieur de la cellule radio.

4. Procédé selon l'une des revendications 1 à 3, **caractérisé en ce que** l'on utilise, pour la transmission de données, un procédé d'accès multiple à répartition dans le temps et/ou un procédé d'accès multiple à répartition en fréquence.

5. Procédé selon la revendication 4, **caractérisé en ce que**, dans le procédé d'accès multiple à répartition dans le temps avec transmission de données par trame, le signal pilote est choisi de manière à changer d'une trame à l'autre.

6. Procédé selon la revendication 4 ou 5, **caractérisé en ce que**, dans le procédé d'accès multiple à répartition dans le temps avec transmission de données par trame, le signal pilote est transmis en fin de trame.

7. Procédé selon l'une des revendications 4 à 6, **caractérisé en ce que** l'on utilise les mêmes intervalles de temps et/ou les mêmes fréquences pour la transmission du signal pilote.

8. Procédé selon l'une des revendications précédentes, **caractérisé en ce que** l'on utilise un procédé de transmission de données OFDM pour la transmission de données et **en ce que** l'on utilise au moins deux sous-porteuses de signal pilote pour la transmission du signal pilote.

9. Procédé selon la revendication 8, **caractérisé en ce que**, lors de l'utilisation d'un procédé d'accès multiple à répartition dans le temps avec transmission de données par trame, les sous-porteuses de signal pilote sont choisies de manière à changer d'une trame à l'autre.

10. Procédé selon la revendication 8 ou 9, **caractérisé en ce que**, lors de l'utilisation d'un procédé d'accès multiple à répartition dans le temps avec transmission de données par trame, la transmission du signal pilote a lieu en fin de trame.

11. Procédé selon la revendication 9 ou 10, **caractérisé en ce que** les sous-porteuses de signal pilote sont choisies par la station de base de manière à être directement adjacentes.

12. Procédé selon l'une des revendications 9 à 11, **caractérisé en ce que** le signal pilote est formé par aux moins deux symboles consécutifs et les symboles consécutifs sont transmis par les sous-porteuses de signal pilote.

13. Procédé selon la revendication 12, **caractérisé en ce qu'**il n'y a pas d'autres symboles transmis par d'autres sous-porteuses disponibles pendant la transmission du signal pilote.

14. Procédé selon la revendication 12 ou 13, **caractérisé**
- **en ce qu'**un écart temporel est défini en se basant sur une rotation de phase déterminée entre des symboles reçus de différentes sous-porteuses de signal pilote et/ou
- **en ce qu'**un écart fréquentiel est défini en se basant sur une rotation de phase déterminée entre des symboles consécutifs d'une sous-porteuse de signal pilote.

15. Procédé selon l'une des revendications précédentes, **caractérisé en ce que** la transmission de données est exécutée au moyen d'une norme de transmission radio TDD ou au moyen d'une norme de transmission radio FDD.

16. Station de base, **caractérisée par** des moyens pour exécuter le procédé selon l'une des revendications 1 à 15.

17. Station mobile, **caractérisée par** des moyens pour exécuter le procédé selon l'une des revendications 2 à 15.

18. Système de radiocommunication, **caractérisé par** au moins une station de base selon la revendication 16.

19. Système de radiocommunication, **caractérisé par** au moins une station mobile selon la revendication 17.
